# DEMANDE DE BREVET EUROPEEN

(11) **EP 0 566 502 A1**
(43) Date de publication de la demande: **20.10.1993**
(21) Numéro de dépôt: 93420103.9
(22) Date de dépôt: 05.03.1993
(51) Int. Cl.: B60R 22/30

(54) **Ensemble de ceinturage de sécurité, et sangle adaptée à un tel ensemble**

(30) Priorité: 13.04.1992 FR 9204731
(71) Demandeur: Chollet, Jean-Louis, F-69005 Lyon (FR); Schaller, Pierre-André, F-69570 Dardilly (FR)
(72) Inventeur: Chollet, Jean-Louis, F-69005 Lyon (FR); Schaller, Pierre-André, F-69570 Dardilly (FR)
(74) Mandataire: Perrier, Jean-Pierre

(57) **Abrégé**

Cet ensemble de ceinturage comprend une ceinture diagonale thoracique (4), une ceinture transversale (6) ventrale, ainsi qu'une sangle de liaison (7) comportant des organes de liaison bas (8) et haut (9).

Selon l'invention, au moins l'un des organes de liaison (8,9) de la sangle (7) comprend un moyen positif d'arrêt de la ceinture, constitué par deux éléments (22,24), articulés (23) l'un par rapport à l'autre, entre une position fermée bloquant en traction la ceinture passant dans le passage dudit organe, et une position ouverte autorisant le glissement de ladite ceinture dans ledit passage, ainsi qu'un moyen (29,30) de maintien des deux éléments articulés en position fermée.

## Description

La présente invention concerne un ensemble de ceinturage de sécurité, tel que connu aujourd'hui pour les véhicules automobiles, et destiné à protéger un utilisateur dudit véhicule, assis sur un siège en relation avec ledit ensemble de ceinturage, contre les décélérations ou chocs du véhicule, par exemple en cas d'accident.

Conformément aux documents AU-A-489 040, DE-A-3 830 925, DE-A-3 132 735, US-A-5 080 396 et US-A-4 832 367, on connaît déjà différents ensembles de ceinturage de sécurité, destinés à protéger un utilisateur de petite taille, notamment un enfant, assis directement sur un siège de taille standard.

De manière générale, un tel ensemble comprend :
- une ceinture diagonale thoracique, reliée à une extrémité haute au mobile, par exemple le châssis du véhicule automobile, et à une extrémité basse à une attache réversible de sécurité, c'est-à-dire pouvant être verrouillée et déverrouillée à volonté,
- une ceinture transversale ventrale, reliée à une extrémité latérale à l'attache réversible de sécurité
- une sangle de liaison reliant, d'un côté une zone intermédiaire de la ceinture transversale, grâce à un organe de liaison bas comprenant un passage pour la ceinture transversale, et un moyen de liaison avec la sangle, par exemple un anneau ou oeillet, et de l'autre côté, une zone intermédiaire de la ceinture diagonale, grâce à un autre organe de liaison, dit organe de liaison haut, comprenant un passage pour la ceinture diagonale, et un moyen de liaison avec la sangle
- et l'attache réversible de sécurité, précédemment citée, comprenant un premier élément de verrouillage, par exemple un élément mâle, solidaire à la fois de l'extrémité basse de la ceinture diagonale et de l'autre extrémité latérale de la ceinture transversale, et un deuxième élément de verrouillage complémentaire, par exemple un élément femelle, solidaire du mobile.

Bien entendu, l'ensemble de ceinturage de sécurité précédemment décrit peut être statique ou avec des enrouleurs ; ces derniers permettent, avec des moyens de rappel appropriés, d'enrouler la ceinture diagonale et/ou la ceinture transversale, lorsque cette dernière n'est pas utilisée et que par conséquent l'attache réversible de verrouillage est ouverte. Un tel enrouleur peut être disposé à l'une des extrémités quelconque des ceintures diagonale et transversale, et il peut comprendre des moyens de blocage du déroulement des ceintures, en cas d'accident.

L'ensemble de ceinturage précédemment décrit, et plus particulièrement la sangle de liaison entre les ceintures transversale et diagonale permettent d'infléchir, en position attachée des ceintures contre le tronc de l'utilisateur de petite taille, la ligne décrite par la ceinture diagonale, selon une ligne brisée avec un angle obtus, et ceci directement au contact du thorax de l'utilisateur et à l'écart de sa tête.

Un tel ensemble de ceinturage apporte aussi un certain confort à l'utilisateur de grande taille, celui-ci pouvant varier à volonté la trajectoire de la ceinture diagonale, dans la position attachée des ceintures.

Différents documents, à savoir DE-A-3 132 735 et US-A-4 832 367 ont en outre prévu qu'au moins un organe de liaison soit agencé pour gêner, voire arrêter, tout glissement de la ceinture vis-à-vis du passage dans lequel elle est insérée, et ceci uniquement pour conserver le réglage en position de la sangle de liaison, une fois celui-ci effectué par l'utilisateur. Cet agencement consiste en de simples moyens de serrage de la sangle sur la ceinture, ou encore en des moyens d'adhésion réversibles de la ceinture à l'intérieur du passage dans lequel elle est insérée.

Les ensembles de ceinturage précédemment décrits ne constituent pas un ensemble complet de sécurité, au sens où la sangle de liaison demeure un élément de confort, mais n'est certainement pas un élément de sécurité à part entière. En cas de choc, cette sangle demeure susceptible de se déplacer par rapport aux ceintures, transversale et/ou diagonale, y compris les moyens de freinage en glissement prévus décrits précédemment.

La présente invention a pour objet de remédier à ces inconvénients. L'invention a plus particulièrement pour objet une sangle de liaison complétant la sécurité de base apportée par les ceintures transversale et diagonale.

Conformément à l'invention, au moins un organe de liaison de la sangle comprend un moyen positif d'arrêt de la ceinture, contre tout glissement en traction dans ledit passage, tel qu'exercé en cas de choc ou décélération. Et ce moyen d'arrêt est constitué par deux éléments articulés l'un par rapport à l'autre, entre une position fermée bloquant en traction la ceinture passant dans le passage de l'organe de liaison, et une position ouverte autorisant un glissement relatif de ladite ceinture dans ledit passage, et éventuellement permettant aussi de libérer l'organe de liaison par rapport à la ceinture. Et un moyen permet de maintenir les deux éléments articulés, en position fermée.

Grâce à l'invention, et dans la position fermée des organes de liaison de la sangle sur les deux ceintures, transversale et diagonale, l'ensemble de ceinturage devient triangulé de manière rigide et ferme, en formant vers l'avant du passager un véritable bau- drierde protection de ce dernier. En particulier, en cas de choc, on évite toute séparation ou mouvement de la sangle, par rapport à la ceinture transversale, en remontant vers le visage de l'utilisateur.

Grâce à l'invention, la triangulation définie précédemment permet de rééquilibrer les forces résistantes de l'ensemble de ceinturage, en cas de choc. L'assujettissement entre la sangle et les ceintures, obtenu grâce à l'invention, devient équivalent à une couture entre tous ces éléments flexibles, mais ce de manière totalement réglable, et éventuellement amovible.

La présente invention est maintenant décrite par référence aux dessins annexés, dans lesquels :
- la figure 1 représente un ensemble de ceinturage de sécurité selon l'art antérieur
- la figure 2 représente un ensemble de ceinturage selon l'invention
- la figure 3 représente à plat, un organe de liaison bas, appartenant à l'ensemble de ceinturage de sécurité selon l'invention, en position sur la ceinture transversale
- la figure 4 représente à plat, un organe de liaison haut, en position sur la ceinture diagonale
- la figure 5 représente une vue en coupe de l'organe de liaison haut ou de l'organe de liaison bas, dans sa position fermée
- la figure 6 représente une vue en position ouverte de l'organe de liaison haut ou de l'organe de liaison bas, représenté à la figure 3 ou 4
- la figure 7 représente une vue partielle en perspective montrant une autre forme d'exécution de l'ensemble de ceinturage
- la figure 8 représente une vue en perspective de l'un des organes de liaison de figure 7, le montrant en position ouverte
- les figures 9, 10 et 11 représentent des vues partielles en perspective montrant, à échelle réduite, les trois phases de mise en position d'un organe de liaison sur un élément de ceinture
- la figure 12 représente une vue en coupe transversale suivant XII-XII de figure 11, montrant à échelle agrandie le mode de coincement de l'élément de ceinture
- la figure 13 représente une vue en coupe longitudinale de l'organe de liaison.

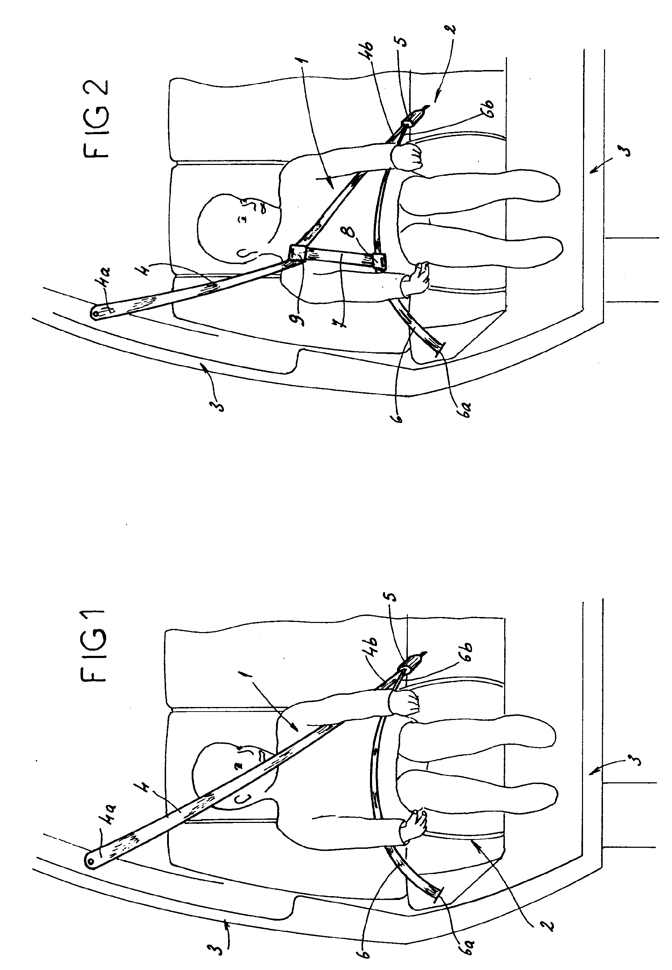

Comme représenté à la figure 2, un ensemble de ceinturage de sécurité selon l'invention permet de protéger un utilisateur 1 de petite taille, notamment un enfant, assis directement sur un siège 2 de taille standard et solidaire d'un véhicule automobile 3, représenté schématiquement par sa carrosserie ou carcasse. Un tel ensemble comprend :
- une ceinture diagonale thoracique 4 reliée à une extrémité haute 4a à la carcasse du véhicule automobile 3, et à une extrémité basse 4b à une attache réversible 5 de sécurité
- une ceinture transversale 6 ventrale reliée à une extrémité latérale 6a, par exemple à gauche selon la figure 2, à la carcasse 3 du véhicule automobile, et à l'autre extrémité latérale 6b, c'est-à-dire à droite selon la figure 2, à l'attache réversible 5 de sécurité
- ladite attache de sécurité comprenant de manière traditionnelle, et non décrite ci-après, un premier élément lié ou solidaire à la fois de l'extrémité basse 4b de la ceinture diagonale 4 et de l'autre extrémité latérale 6b de la ceinture transversale 6, ainsi qu'un deuxième élément complémentaire solidaire ou lié à la carcasse 3 du véhicule automobile
- une sangle de liaison 7 reliant, d'un côté par un organe de liaison bas 8, une zone intermédiaire de la ceinture transversale 6, et de l'autre côté par un organe de liaison haut 9, une zone intermédiaire de la ceinture diagonale 4, ceci de manière à infléchir comme représenté à la figure 2, en position attachée des ceintures 4 et 6 contre le tronc de l'enfant 1, la ligne décrite par la ceinture diagonale 4 selon une ligne brisée avec un angle obtus.

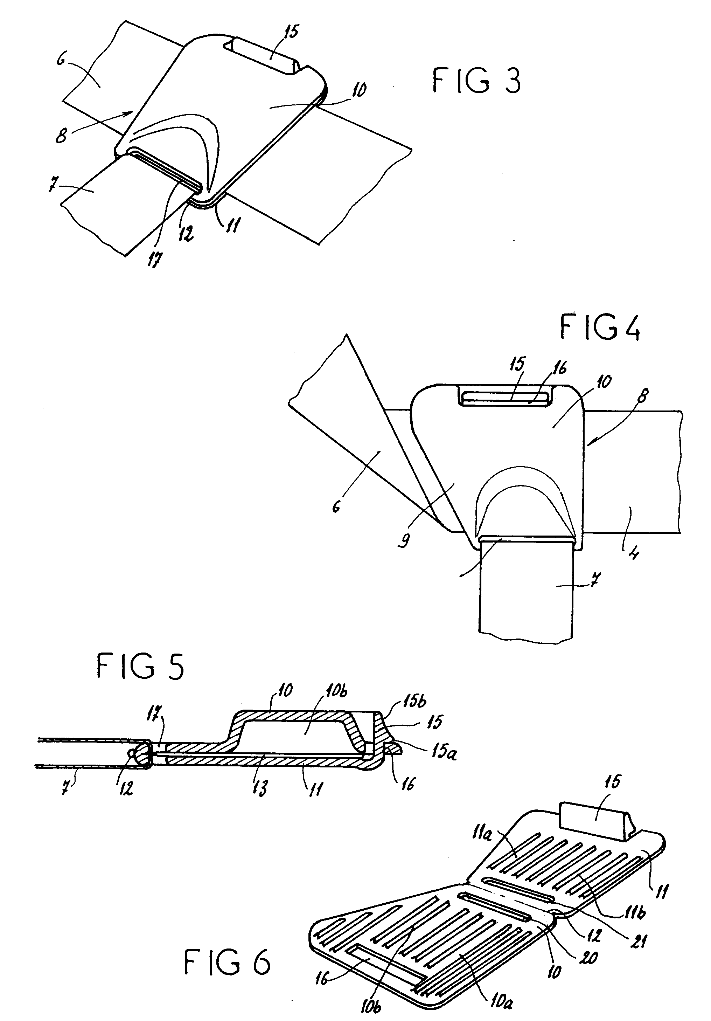

Comme représenté aux figures 3 à 6, les organes de liaison bas 8 et de liaison haut 9 sont agencés exactement de la même manière. En conséquence, seul l'organe de liaison bas 8 sera décrit ci-après. L'organe de liaison bas 8 est réalisé de manière monobloc en une matière plastique présentant les propriétés mécaniques requises par l'utilisation de l'ensemble de ceinturage de sécurité. Cet organe comprend deux mâchoires 10 et 11 formant ensemble une pince, articulées l'une par rapport à l'autre avec une charnière plastique 12, entre une position fermée représentée à la figure 5, déterminant un premier passage 13 pour la ceinture transversale 6, et une position ouverte représentée à la figure 6, libérant cet organe de liaison bas en translation par rapport à la ceinture transversale 6.

Comme représentées par les figures 5 et 6, les deux mâchoires 10 et 11 comportent respectivement deux lumières 20 et 21, parallèles au passage 13 décrit précédemment, en coïncidence dans la position fermée représentée à la figure 5, et déterminant ensemble une boucle 17 pour le passage et la liaison avec la sangle 7, orientée transversalement par rapport au premier passage 13.

Les faces internes 10a et 11a des mâchoires 10 et 11 sont pourvues de crampons 10b et 11 b respectivement, orientés transversalement par rapport au passage 13, permettant d'agripper cet organe de liaison contré la ceinture transversale 6, dans la position fermée de la pince.

Comme représenté aux figures 5 et 6, l'organe de liaison 8 est pourvu d'un moyen réversible et avec sécurité, de maintien de la pince en position fermée. Ce moyen consiste en un ergot 15 orienté perpendiculairement au plan de la mâchoire 13, comportant un bord d'attaque 15a, élastiquement basculable vers l'intérieur de l'organe 8, et pourvu d'une rampe 15b au-dessus du bord d'attaque. En correspondance, l'autre mâchoire 10 est pourvue d'une ouverture ou fente 16, adaptée en forme et en dimensions au passage et à l'introduction de l'ergot 15. Lors du mouvement de fermeture de l'organe 8, la bordure extérieure de l'ouverture 16 coopère avec la rampe 15b pour venir se loger sous le bord 15a de l'ergot 15, après déformation élastique de ce dernier vers l'intérieur. Un tel organe de liaison apparaît particulièrement adapté à l'objectif de sécurité recherché, puisque la libération de l'ergot 15 par rapport à la fente 16, suppose la conjonction de deux mouvements, l'un pour repousser l'ergot 15 vers l'intérieur, et l'autre de haut en bas, pour sortir l'ergot 15 de l'ouverture 16.

Comme déjà dit, l'organe de liaison haut 9 est agencé de la même manière que l'organe 8 précédemment décrit, le premier passage 13 étant affecté à la ceinture diagonale 4.

De manière non décrite spécifiquement, la sangle de liaison 7 peut comporter un brin de réglage de sa longueur, entre les organes 8 et 9, et autour des lumières 17 respectivement, par exemple au moyen d'une boucle traditionnelle.

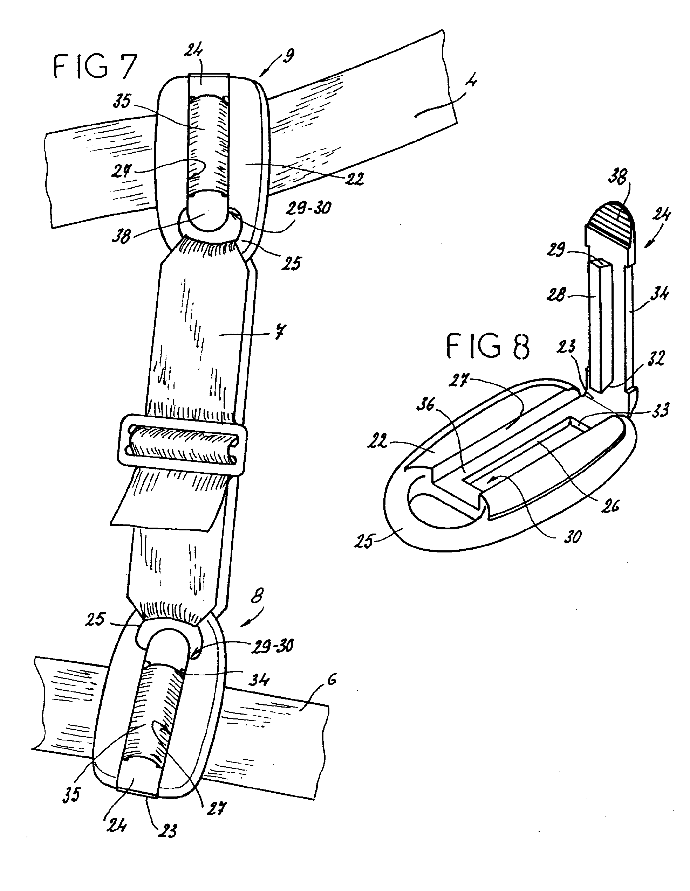

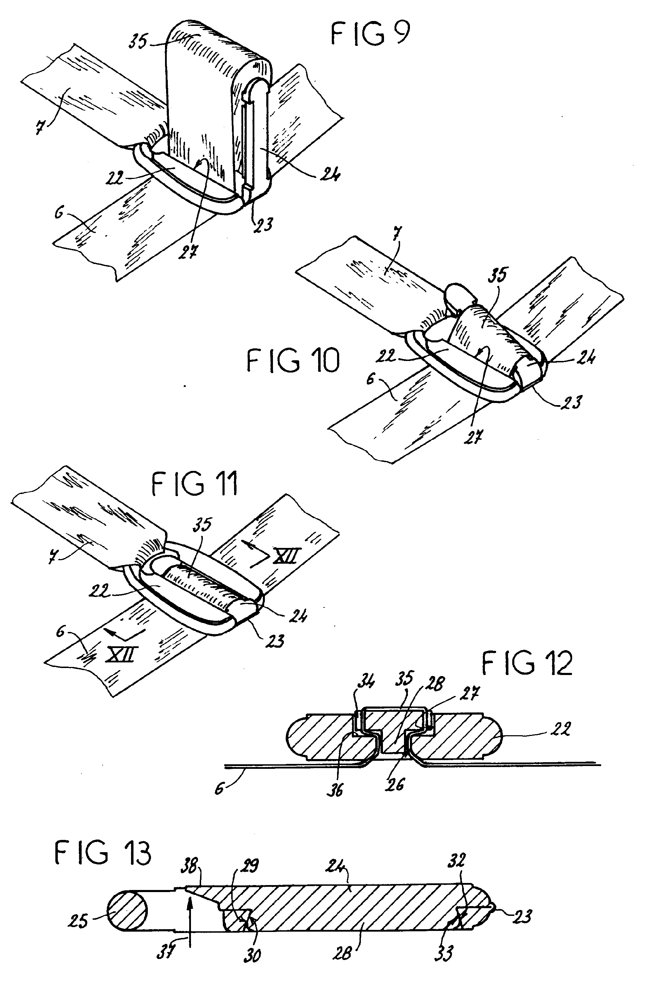

La forme d'exécution représentée aux figures 7 à 13 se différencie de celle qui précède par la forme et la structure de chacun des organes de liaison 8 et 9, par ailleurs identiques entre eux. Comme le montre la figure 8, chaque organe est composé d'un corps de boucle 22 sur le bord duquel est articulée, par un voile de matière 23 formant charnière, une barrette 24. Le corps de boucle 22 comporte, localement, un anneau 25 pour sa liaison avec la sangle intermédiaire 7. Cet anneau est disposé à proximité du bord qui est opposé à celui sur lequel est articulée la barrette 24.

Dans sa partie centrale, le corps est traversé par une fente 26 dont l'axe longitudinal est perpendiculaire à l'axe d'articulation de la charnière 23. Cette fente traverse le fond d'une rainure longitudinale 27 qui, s'étendant de la charnière 23 jusqu'à l'anneau 25 et débouchant en vis-à-vis de la barrette 24, est apte à recevoir cette barrette comme le montre la figure 12.

Cette barrette présente, dans sa partie centrale et sur la plus grande partie de sa longueur, un tenon 28 qui, lui donnant localement une section transversale en T, est apte à pénétrer avec jeu latéral dans la fente 26. La figure 13 montre que le tenon 28 comporte, à l'une de ses extrémités, un cran 29 apte à s'encliqueter sur un redan en contre dépouille 30 ménagé à l'extrémité correspondante de la fente 26, tandis que son autre extrémité, disposée près de la charnière 23, est incurvée en 32 et coopère avec un bord incurvé 33 de la fente 26, pour guider le pivotement de fermeture de la barrette et la caler en translation longitudinale en fin de fermeture.

Dans la forme d'exécution représentée, la fente transversale 26 a une longueur supérieure à la largeur de l'élément de ceinture 4 ou 6 et la barrette 24 comporte, sur les deux bords longitudinaux, des entailles 34 de longueur au moins égale à la largeur de l'élément de ceinture et de profondeur au moins égale à l'épaisseur de cet élément.

Pour mettre en place l'organe de liaison sur l'élément de ceinture et, par exemple, sur l'élément transversal 6, comme montré figure 9, il faut d'abord former sur cet élément une boucle ou pli 35, puis faire passe ce pli à travers la fente 26, en prenant soin d'en faire saillir une longueur suffisante pour permettre le basculement de la barrette 24, alors maintenue en position ouverte, c'est-à-dire dans une position où elle forme un angle proche de 90° par rapport au corps de boucle, pour bien dégager la fente. Dans une phase suivante, montrée à la figure 10, la barrette est basculée en direction du corps 22 à l'intérieur du pli 35, et le corps de boucle est réglé en position par coulissement sur l'élément 6 de la ceinture.

Après que les mêmes opérations aient été exécutées pour l'autre organe de liaison, il est procédé au blocage en position de chacun des deux organes 8, 9 par simple appui sur les barrettes 24, de manière à provoquer l'encliquetage de leur cran 29 sur le redan 30 du corps 22 correspondant. Sous l'effet de ce verrouillage positif, et comme le montre la figure 12, la barrette 24 pince chacun des brins du pli 35 de la ceinture contre le fond 36 de la rainure 27, c'est-à-dire contre les faces bordant la fente 26, et complète ainsi positivement le coincement par frottement assuré par l'enroulement du pli autour de la section en T de la barrette.

Pour modifier le réglage ou pour retirer la sangle 7 de liaison, il suffit de déverrouiller la barrette en introduisant un doigt dans l'anneau 25 du corps de boucle pour communiquer un effort dans le sens de la flèche 37 de figure 13 sur l'extrémité libre de la barrette 24, aménagée en languette de préhension 38.

Un ensemble de ceinturage de sécurité selon l'invention peut être mis en oeuvre de deux manières :
- selon une première manière, il peut être monté ou vendu complet, dans un véhicule automobile neuf par exemple
- ou, s'agissant des véhicules automobiles existants, comprenant déjà un ensemble de ceinturage de sécurité selon l'invention, conforme à l'art antérieur précédemment décrit, il suffit de se procurer séparément une sangle de liaison 7, pourvue à ses deux extrémités des organes de liaison 8 et 9, pour monter celle-ci entre la ceinture transversale et la ceinture diagonale, pour aboutir à l'ensemble de ceinturage de sécurité selon l'invention.

## Revendications

1) Ensemble de ceinturage de sécurité, destiné à protéger un utilisateur (1) de petite taille, notamment un enfant, assis directement sur un siège (2) de taille standard et solidaire d'un mobile (3), comprenant une ceinture diagonale thoracique (4) reliée à une extrémité haute (4a) au mobile (3) et à une extrémité basse (4b) à une attache réversible (5) de sécurité, une ceinture transversale (6) ventrale reliée à une extrémité latérale (6a) au mobile (3), et à l'autre extrémité latérale (6b) à l'attache réversible de sécurité, ainsi qu'une sangle de liaison (7) reliant, d'un côté une zone intermédiaire de la ceinture transversale (6), grâce à un organe de liaison bas (8) comprenant un passage (13) pour la ceinture transversale (6), et un moyen de liaison avec la sangle (7), et de l'autre côté une zone intermédiaire de la ceinture diagonale (4), grâce à un organe de liaison haut (9), comprenant un passage pour la ceinture diagonale (4), et un moyen de liaison avec la sangle, ladite attache réversible (5) comprenant un premier élément solidaire à la fois de l'extrémité basse de la ceinture diagonale et de l'autre extrémité latérale de la ceinture transversale, et un deuxième élément complémentaire solidaire du mobile (3), caractérisé en ce qu'au moins l'un des organes de liaison (8,9) de la sangle (7) comprend un moyen positif d'arrêt de la ceinture, en traction dans ledit passage, constitué par deux éléments (10,11), articulés (12) l'un par rapport à l'autre, entre une position fermée bloquant en traction la ceinture passant dans le passage dudit organe, et une position ouverte autorisant le glissement de ladite ceinture dans ledit passage, et permettant éventuellement de libérer ledit organe de liaison par rapport à ladite ceinture, ainsi qu'un moyen (14,15) de maintien des deux éléments articulés en position fermée.

2) Ensemble selon la revendication 1, caractérisé en ce que les deux éléments (10,11) articulés (12) l'un par rapport à l'autre, sont deux mâchoires.

3) Ensemble selon la revendication 2, caractérisé en ce que la face interne (10a,11a) d'une mâchoire (10,11) au moins est pourvue de crampons (10b,11b) d'agrippage contre la ceinture, dans la position fermée de ladite mâchoire.

4) Ensemble selon la revendication 1, caractérisé en ce que les deux éléments de l'organe de liaison (8,9), articulés l'un à l'autre, et formant ensemble le moyen positif d'arrêt, sont respectivement :
- un corps de boucle (22) comportant un passage transversal en forme de fente (26) pour le passage d'un pli (35) de la ceinture
- une barrette de blocage (24), articulée perpendiculairement au passage transversal, entre une position fermée, dans laquelle elle obture pratiquement complètement ledit passage transversal, en ménageant deux espaces de coincement des deux brins, respectivement (35a,35b), du pli (35) de ceinture, délimités entre la barrette (24) et les deux faces (36) bordant le passage transversal (26), et une position ouverte, dans laquelle elle dégage le passage transversal, pour le glissement libre du pli, dans ce passage transversal (26) et autour de la barrette (24).

5) Ensemble selon la revendication 4, caractérisé en ce que la barrette est solidaire d'un tenon central

(28) qui, lui donnant localement une section transversale en T, est apte à pénétrer dans la fente transversale (26), tandis que la dite fente (26) débouche du fond d'une rainure (27) ménagée dans le corps de boucle (22) et apte à recevoir la barrette (24), pour former avec elle moyens de coincement par frottement du pli de ceinture. 6) Ensemble selon l'ensemble des revendications 4 et 5, caractérisé en ce que la barrette (24) comporte sur chacun de ses deux bords longitudinaux, une entaille (34) de longueur au moins égale à la largeur de la ceinture et de profondeur au moins égale à l'épaisseur de cette ceinture.

7) Ensemble selon l'une quelconque des revendications 5 et 6, caractérisé en ce que le tenon (28) de la barrette (24) comporte, à l'une de ses extrémités, un cran (29) apte à s'encliqueter, en fin de fermeture de la barrette, avec un redan (30) ménagé à l'extrémité correspondante de la fente (26).

8) Ensemble selon l'une quelconque des revendications 4 et 7, caractérisé en ce que la barrette (26) est articulée sur l'une des extrémités du corps de boucle (22).

9) Ensemble selon la revendication 8, caractérisé en ce que le corps de boucle (22) comporte, à son autre extrémité, un anneau (25) d'accrochage à la sangle de liaison, anneau constituant également réceptacle pour une languette de préhension (38) aménagée à l'extrémité libre de la barrette (24).

10) Sangle de liaison (7) destinée à un ensemble de ceinturage de sécurité comprenant une ceinture diagonale (4) et une ceinture transversale (6), comprenant deux organes de liaison (8,9) liés respectivement à ses deux extrémités, comportant deux passages respectivement pour l'une et l'autre ceintures (4,6) dudit ensemble de ceinturage de sécurité, caractérisée en ce qu'au moins l'un des organes de liaison (8,9) de la sangle (7) comprend un moyen positif d'arrêt de la ceinture, en traction dans ledit passage, constitué par deux éléments (10,11), articulés

(12) l'un par rapport à l'autre, entre une position fermée bloquant en traction la ceinture passant dans le passage dudit organe, et une position ouverte autorisant le glissement de ladite ceinture dans ledit passage, et éventuellement permettant de libérer ledit organe de liaison par rapport à ladite ceinture, ainsi qu'un moyen (14,15) de maintien des deux éléments articulés en position fermée.

11) Sangle de liaison selon la revendication 10, caractérisée en ce que les deux éléments (10,11) articulés (12) l'un par rapport à l'autre, sont deux mâchoires.

12) Sangle de liaison selon la revendication 10, caractérisée en ce que les deux éléments de l'organe de liaison (8,9), articulés l'un à l'autre, et formant ensemble le moyen positif d'arrêt, sont respectivement :
- un corps de boucle (22) comportant un passage transversal en forme de fente (26) pour le passage d'un pli de la ceinture
- une barrette de blocage (24), articulée perpendiculairement au passage transversal, entre une position fermée dans laquelle elle obture pratiquement complètement ledit passage transversal, en ménageant deux espaces de coincement des deux brins (35a,35b) du pli de ceinture, délimités entre la barrette (24) et les deux faces (36) bordant le passage transversal (36), et une position ouverte dans laquelle elle dégage le passage transversal, pour le glissement libre du pli, dans ce passage transversal (26) et autour de la barrette (24).

13) Mobile (13), notamment véhicule automobile équipé d'un ensemble de ceinturage selon l'une quelconque des revendications 1 à 9, en relation avec un siège (2) solidaire dudit mobile.
